(19) Europäisches Patentamt / European Patent Office / Office européen des brevets

(11) **EP 4 653 942 A1**

(12) **EUROPEAN PATENT APPLICATION**
published in accordance with Art. 153(4) EPC

(43) Date of publication:
**26.11.2025 Bulletin 2025/48**

(21) Application number: 23917857.7

(22) Date of filing: **26.10.2023**

(51) International Patent Classification (IPC):
*G02F 1/1335* (2006.01)   *G02F 1/1343* (2006.01)
*G02F 1/1337* (2006.01)   *G02F 1/137* (2006.01)
*G02F 1/1339* (2006.01)   *B60J 3/04* (2006.01)
*E06B 9/24* (2006.01)   *B32B 17/10* (2006.01)
*B32B 7/023* (2019.01)   *B32B 37/12* (2006.01)

(52) Cooperative Patent Classification (CPC):
**B32B 7/023; B32B 17/10; B32B 37/12; B60J 3/04;
E06B 9/24; G02F 1/1335; G02F 1/1337;
G02F 1/1339; G02F 1/1343; G02F 1/137**

(86) International application number:
**PCT/KR2023/016721**

(87) International publication number:
**WO 2024/154902 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **17.01.2023 KR 20230006575**

(71) Applicant: Dongwoo Fine-Chem Co., Ltd.
**Iksan-si, Jeollabuk-do 54631 (KR)**

(72) Inventors:
- KIM, Jin-Ho
  **Iksan-si, Jeonbuk-do 54631 (KR)**
- RYU, Hyun-Sun
  **Iksan-si, Jeonbuk-do 54631 (KR)**
- KIM, Hyung-Hun
  **Iksan-si, Jeonbuk-do 54631 (KR)**
- HEO, Sub
  **Iksan-si, Jeonbuk-do 54631 (KR)**

(74) Representative: **Betten & Resch
Patent- und Rechtsanwälte PartGmbB
Maximiliansplatz 14
80333 München (DE)**

(54) **OPTICAL LAMINATE, MANUFACTURING METHOD THEREFOR, SMART WINDOW COMPRISING SAME, AND CAR OR BUILDING WINDOW AND DOOR TO WHICH SAME IS APPLIED**

(57)    The present disclosure relates to an optical laminate including: a liquid crystal layer; a first optical functional layer formed on one surface of the liquid crystal layer; and a second optical functional layer formed on the other surface of the liquid crystal layer and facing the first optical functional layer, wherein the first optical functional layer and the second optical functional layer each independently include a substrate layer and a functional conductive layer, and at least one of the first optical functional layer and the second optical functional layer includes two or more layers of the functional conductive layer.

[FIG. 1]

100

EP 4 653 942 A1

## Description

[Technical Field]

The present disclosure relates to an optical laminate, a method for manufacturing the same, a smart window including the same, and an automobile or building window to which the same is applied.

[Background Art]

In general, there are many cases where external light blocking coatings are applied to the windows of means of transportation such as vehicles, etc. However, the windows of conventional means of transportation have fixed transmittance, and the external light blocking coatings also have fixed transmittance. Therefore, the windows of such conventional means of transportation have fixed overall transmittance, which may cause accidents. For example, if the overall transmittance is set low, there is no problem during the day when ambient light is sufficient, but there is a problem in that drivers and others may have difficulty properly checking the surroundings of the means of transportation at night when there is not enough light around. Alternatively, if the overall transmittance is set high, there is a problem in that drivers and others may be dazzled during the day when ambient light is insufficient. Accordingly, an optical laminate that can change the transmittance of light when voltage is applied has been developed.

The optical laminate is driven by varying the transmittance by driving the liquid crystal according to the voltage application, and the optical laminates developed to date are manufactured by forming a conductive layer for driving the liquid crystal on a separate substrate and then combining this with other elements such as a polarizing plate.

For example, Japanese Patent Publication No. 2018-010035 also discloses an optical laminate including a functional electrode layer formed on a polycarbonate (PC) substrate having a predetermined thickness. However, if a separate substrate is included to form a conductive layer in this way, there are problems in that the manufacturing cost increases as the manufacturing process becomes more complicated, the thickness of the laminate increases, and the transmittance changes due to the occurrence of a phase difference. In addition, ITO (Indium Tin Oxide), which is an electrode material mainly used for the functional electrode layer, is an inorganic oxide, in which cracks easily occur even when small external stress changes, and surface resistance increases, which is disadvantageous for manufacturing various types of optical laminates.

Korean Patent No. 10-2265762 discloses an infrared blocking functional electrode pressure sensitive adhesive and a smart window including the same that can achieve ease of use and cost reduction by integrating infrared blocking and electrode functions in one pressure sensitive adhesive/adhesive layer to manufacture one coating layer, and the infrared blocking functional electrode pressure sensitive adhesive includes metal nanowires. However, when applying a metal or metal alloy to a functional layer for application to a window in this way, a reflection phenomenon occurs, which is not good in appearance, and there is a risk of accidents, and the window may be vulnerable to cracks due to external impact in terms of durability.

Therefore, there is a need to develop a high-quality optical laminate that has low reflection and heat blocking properties and strong durability.

## [Disclosure]

[Technical Problem]

The present disclosure aims to provide an optical laminate that can save energy by improving the infrared blocking rate while lowering the transmittance of sunlight in order to solve the above-described problems.

In addition, the present disclosure aims to provide an optical laminate that can prevent cracks from occurring due to external stress and reduce the increase rate of surface resistance.

Further, the present disclosure aims to provide a smart window including the optical laminate and an automobile or building window to which the same is applied.

However, the problems to be solved by the present disclosure are not limited to the problems mentioned above, and other problems not mentioned will be clearly understood by those skilled in the art from the description below.

## [Technical Solution]

The present disclosure relates to an optical laminate including: a liquid crystal layer; a first optical functional layer formed on one surface of the liquid crystal layer; and a second optical functional layer formed on the other surface of the liquid crystal layer and facing the first optical functional layer, wherein the first optical functional layer and the second optical functional layer each independently include a substrate layer and a functional conductive layer, and at least one of the first optical functional layer and the second optical functional layer includes two or more layers of the functional conductive layer.

The present disclosure may be characterized in that the functional conductive layer includes a conductive polymer.

In the present disclosure, the conductive polymer may include one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene), poly(3,4-ethylenedioxythiophene):polystyrene sulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid.

In the present disclosure, the functional conductive layer may have a thickness of 1.0 to 3.0 $\mu$m.

In the present disclosure, the substrate layer may include one or more selected from the group consisting of a cycloolefin resin, a cellulose resin, an acrylate-based resin, a polyester resin, and a polycarbonate resin.

In the present disclosure, the substrate layer may include a polarizer.

In the present disclosure, the liquid crystal layer may be polarizing film-liquid crystals (POL-LC) or polymer dispersed liquid crystals (PDLC).

In the present disclosure, the optical laminate may have a solar energy blocking rate measured according to the optical performance test method KS L 2016:2014, 6.3 of 60% or more.

In the present disclosure, the functional conductive layer may have at least one of the crack density values calculated according to the following Equation 1 of 0 to 0.05 at a tensile strain of more than 1% to 10% or less.

[Equation 1]

$$\rho(\varepsilon) = \ell(\varepsilon)/A$$

(In Equation 1 above, $\varepsilon$ is a tensile strain (%), A is an area (mm$^2$) of an observation region, $\rho(\varepsilon)$ is a crack density value of a functional conductive layer calculated at a tensile strain $\varepsilon$, and $\ell(\varepsilon)$ means a crack area (mm$^2$) of a functional conductive layer in an observation region A measured at a tensile strain $\varepsilon$.)

In the present disclosure, when $\varepsilon$ of Equation 1 above is 2%, the functional conductive layer may have a crack density value calculated according to Equation 1 above of 0.

In the present disclosure, the functional conductive layer may have at least one of the surface resistance increase rates calculated according to the following Equation 2 of 15% or less at a tensile strain of 1% or 10%.

[Equation 2]

$$\delta(\varepsilon) = [\{R.S(\varepsilon)/R.S(0)\}-1] * 100$$

(In Equation 2 above, $\delta(\varepsilon)$ is a surface resistance increase rate (%) of the functional conductive layer calculated at the tensile strain $\varepsilon$, R.S($\varepsilon$) is a surface resistance value ($\Omega/\square$) of the functional conductive layer measured at the tensile strain $\varepsilon$, R.S(0) is a surface resistance value ($\Omega/\square$) of the functional conductive layer measured at the initial state where the tensile strain is 0%, and $\varepsilon$ represents the same meaning as in Equation 1.)

In the present disclosure, the functional conductive layer may have at least one of the surface resistance increase rates calculated according to Equation 2 above of 14% or less at a tensile strain of 1% to 10%.

In the present disclosure, the functional conductive layer may be formed in direct contact with the substrate layer without a separate substrate being included therebetween.

In the present disclosure, the functional conductive layer may be formed in direct contact with the substrate layer with a highly adhesive layer being included therebetween.

In the present disclosure, the liquid crystal layer may include one or more selected from the group consisting of a ball spacer and a column spacer.

In the present disclosure, the optical laminate may further include one or more selected from the group consisting of a protective film, an alignment film, a pressure sensitive adhesive/adhesive layer, an ultraviolet ray absorption layer, and a hard coating layer.

Furthermore, the present disclosure aims to provide a method for manufacturing the optical laminate.

Furthermore, the present disclosure aims to provide a smart window including the optical laminate and automobile and building windows to which the smart window is applied.

**[Advantageous Effects]**

According to the optical laminate according to the present disclosure, the economic feasibility of energy can be improved by lowering the solar ray transmittance and increasing the infrared ray blocking rate.

In addition, according to the optical laminate according to the present disclosure, the crack occurrence and surface resistance increase rate due to external stress can be further reduced compared to the conventional transparent electrode film.

In addition, according to the optical laminate according to the present disclosure, since the functional conductive layer and the substrate layer are formed in direct contact without including a separate layer between them, the process for bonding between respective substrates can be omitted so that the manufacturing process can be simplified compared to the conventional one.

**[Description of Drawings]**

FIG. 1 is a view showing a laminated structure of an optical laminate according to one embodiment of the present disclosure.

FIG. 2 is a view showing a laminated structure of an optical functional layer in an optical laminate according to one embodiment of the present disclosure.

FIG. 3 is a view showing a laminated structure in which a polarizing plate is applied to an optical functional layer in an optical laminate according to another embodiment of the present disclosure.

FIG. 4 is a view showing a laminated structure in which a polarizing plate is applied to an optical functional layer in an optical laminate according to another embodiment of the present disclosure.

FIG. 5 is a view showing a laminated structure of a smart window for vehicles to which an optical laminate is applied according to one embodiment of the present disclosure.

FIG. 6 is a view showing a laminated structure of a smart window for building windows to which an optical laminate is applied according to another embodiment of the present disclosure.

In the above views, reference numerals denote the following components.

100: Optical laminate

110: Optical functional layer

120: Liquid crystal layer

130: Pressure sensitive adhesive/adhesive layer

140: Glass

141: Glass for vehicles

142: Building window glass

210: Functional conductive layer

220: Substrate layer

300: Polarizing plate

310: Polarizer

320: Protective film

**[Best Mode for Carrying Out the Invention]**

The present disclosure relates to an optical laminate having reduced crack occurrence and surface resistance increase rate due to external stress while lowering solar ray transmittance and improving an infrared ray blocking rate.

More specifically, the present disclosure relates to an optical laminate including: a liquid crystal layer; a first optical functional layer formed on one surface of the liquid crystal layer; and a second optical functional layer formed on the other surface of the liquid crystal layer and facing the first optical functional layer, wherein the first optical functional layer and the second optical functional layer each independently include a substrate layer and a functional conductive layer, and at least one of the first optical functional layer and the second optical functional layer includes two or more layers of the functional conductive layer, and the present disclosure is characterized in that the functional conductive layer includes a conductive polymer.

The optical laminate of the present disclosure is particularly suitable for a technical field capable of changing the light transmittance according to the application of voltage, and may be used, for example, in a smart window, etc.

A smart window refers to an optical structure that controls the amount of light or heat that passes through by changing the light transmittance according to the application of an electrical signal. That is, a smart window is provided so that it may be changed into a transparent, opaque, or translucent state by voltage, and is also called a variable transmittance glass, a light control glass, a smart glass, or the like.

Smart windows may be used as partitions for partitioning of the interior space of vehicles and buildings or protecting privacy, or as skylights disposed in openings of buildings, and may also be used as highway signs, bulletin boards, scoreboards, clocks, or advertising screens, and can be used as replacements for glass in transportation means such as windows or sunroofs of automobiles, buses, aircraft, ships, or trains.

The optical laminate of the present disclosure can also be used as a smart window in various technical fields described above, but since the conductive layer is formed directly on the polarizing plate, the liquid crystal laminate included in the optical laminate does not include a separate substrate for forming the conductive layer, so it is thin and advantageous in flexural characteristics, and thus it can be particularly suitably used for a smart window for vehicles or buildings. In one or more embodiments, a smart window to which the optical laminate of the present disclosure is applied may be used as a front window, a rear window, a side window, and a sunroof window of an automobile, or a building window, and in addition to the use for blocking external light, it may also be used for partitioning an internal space of an automobile or a building such as an internal partition, or for protecting privacy.

Hereinafter, with reference to the views, the embodiments of the present disclosure will be described in more detail. However, the following views attached to this specification illustrate preferred embodiments of the present disclosure, and serve to further understand the technical idea of the present disclosure together with the contents of the invention described above, so the present disclosure should not be interpreted as being limited to matters described in such views.

The terms used in this specification are for the purpose of describing embodiments and are not intended to limit the present disclosure. In this specification, the singular also includes the plural unless specifically stated in the phrase. For example, the "functional conductive layer" used in the this specification may mean at least one functional conductive layer between the first functional conductive layer and the second functional conductive layer, the "optical functional layer" may mean at least one optical functional layer between the first optical functional layer and the second optical functional layer, and the "transparent conductive layer" may mean at least one transparent conductive layer between the first transparent conductive layer and the second transparent conductive layer.

The terms "comprises" and/or "comprising" used in this specification are used in the sense that they do not exclude the presence or addition of one or more other components, steps, operations, and/or elements other than the mentioned components, steps, operations, and/or elements. Throughout the specification, the same reference numerals refer to the same components.

The spatially relative terms "below", "bottom surface", "lower part", "above", "top surface", and "upper part" may be used to easily describe the correlation between one element or component and another element or component as illustrated in the views. The spatially relative terms should be understood as terms that include different directions of the elements when used or operated in addition to the directions illustrated in the views. For example, when an element illustrated in the views is flipped, an element described as "below" or "lower part" of another element may be put "above" the other element. Accordingly, the exemplary term "below" may include both the directions below and above. The elements may also be oriented in other directions, and thus the spatially relative terms may be interpreted according to the orientation.

The "plane direction" used in this specification may be interpreted as the direction orthogonal to the polarizing plate and/or the transparent conductive layer, i.e., the direction of the user's view.

The "substantially" used in this specification may be interpreted to include not only being physically completely identical or coincident, but also being within an error range in the measurement or manufacturing process, and for example, it may be interpreted to mean a range of error of 0.1% or less.

### <Optical Laminate>

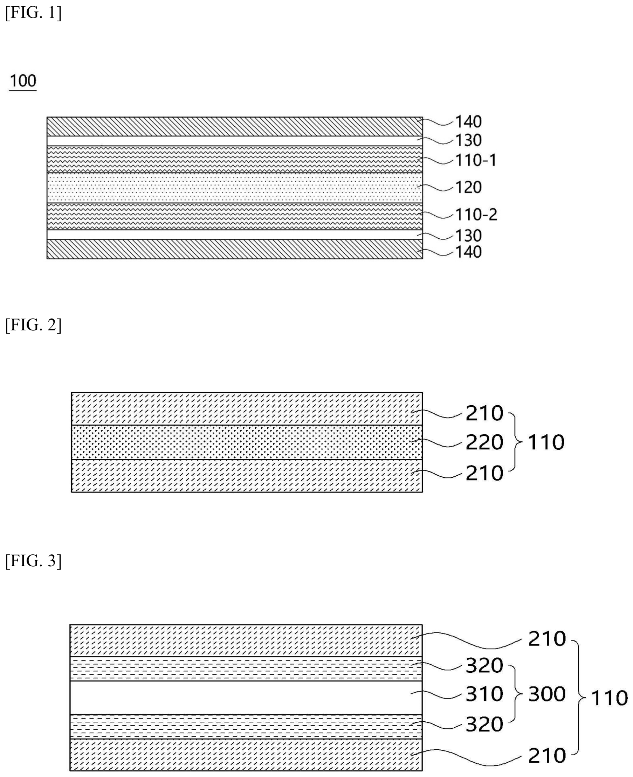

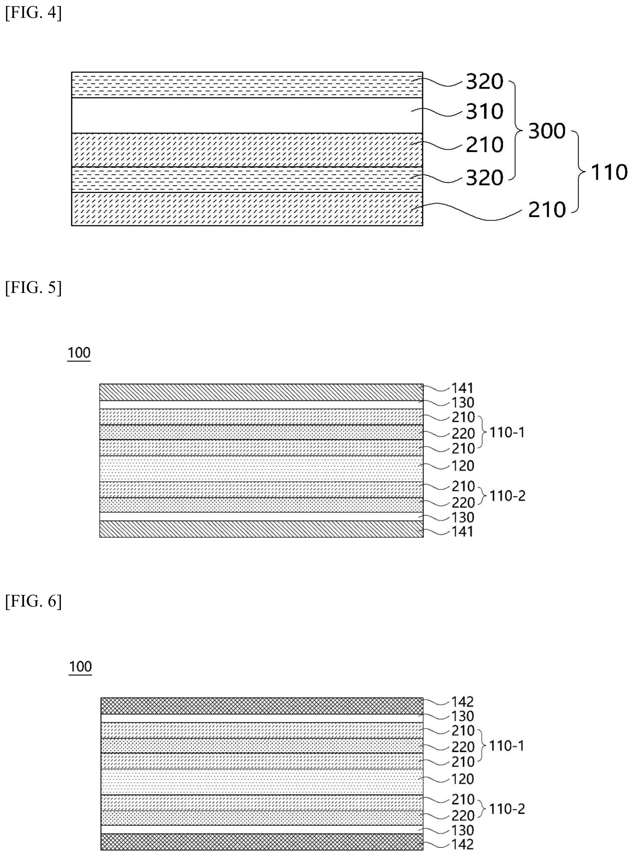

FIG. 1 is a view showing a laminated structure of an optical laminate according to one embodiment of the present disclosure. Referring to FIG. 1, an optical laminate according to one embodiment of the present disclosure may include a first optical functional layer 110-1, a second optical functional layer 110-2, and a liquid crystal layer 120, and at least one of the first optical functional layer and the second optical functional layer may include two or more layers of the functional conductive layer. In addition, the optical laminate according to one embodiment of the present disclosure may be formed by bonding glass 140 using a pressure sensitive adhesive/adhesive layer 130 to both surfaces of the optical laminate including the liquid crystal layer 120 and the optical functional layer 110. More specifically, at least one of the first and second optical functional layers 110-1 and 110-2 may include a functional conductive layer 210 on both surfaces of a substrate layer (see FIGS. 2 and 3), and as described below, the substrate layer is a concept including a polarizer or a polarizing plate. In addition, the substrate layer may include a functional conductive layer on an outer surface and an inner part thereof. For example, at least one of the first optical functional layer and the second optical functional layer may include two layers of the functional conductive layer, one layer being included on the outer surface of the substrate layer (more specifically, the polarizing plate, 300), and the other layer being included between the polarizer 310 and the protective film 320, that is, on the inner part of the substrate layer (more specifically, the polarizing plate, 300) (see FIG. 4). The functional conductive layer 210 that must be comprised of two or more layers on one side optical functional layer may reduce the visible light reflectance compared to the functional conductive layer 210 included in a single layer (low reflection properties) and also has an effect of excellent solar energy blocking rate (heat blocking properties), and thus the optical laminate of the present disclosure has the characteristic of improving economic feasibility of energy. In this aspect, it may preferably be included in 2 to 3 layers, and more preferably in 2 layers. In FIG. 1, the layer formed on the upper surface of the liquid crystal layer is referred to as the first optical functional layer 110-1, and the layer formed on the lower surface of the liquid crystal layer is referred to as the second optical functional layer 110-2, but this is to spatially explain that the optical functional layers are formed on both surfaces, and may be interpreted differently if the layers are oriented in different directions.

In one embodiment, the functional conductive layer 210 may have a crack density value of 0 to 0.05 calculated according to Equation 1 below at a tensile strain of more than 1% to 10% or less.

$$[\text{Equation 1}]$$

$$\rho(\varepsilon) = \ell(\varepsilon)/A$$

In Equation 1 above, $\varepsilon$ is a tensile strain (%), A is an area ($mm^2$) of an observation region, $\rho(\varepsilon)$ is a crack density value of a functional conductive layer calculated at a tensile strain $\varepsilon$, and $\ell(\varepsilon)$ means a crack area ($mm^2$) of a functional conductive layer in an observation region A measured at a tensile strain $\varepsilon$.

Specifically, A may refer to the area of an observation region arbitrarily designated by the user to calculate the crack density value of the functional conductive layer according to the tensile strain. $\ell(\varepsilon)$ may refer to the area (30.36%) of the black portion in the shaded image after converting the image of the functional conductive layer in the observation region photographed using an optical microscope (OM) or a scanning electron microscope (SEM) into a shaded image using an image processing program such as Image J (developed by NIH/LOCI).

Therefore, the crack density value calculated according to Equation 1 above may be interpreted as meaning that the closer it is to 0, cracks do not occur in the functional conductive layer, and meaning that the closer it is to 1, cracks occur on the entire surface of the functional conductive layer.

That is, when the functional conductive layer 210 has a tensile strain of more than 1% to 10% or less, and the crack density value calculated according to Equation 1 above satisfies the above range, crack occurrence due to external stress change can be prevented, so there is an advantage in that stable operation is possible even when external stress changes. According to another embodiment of the present disclosure, when $\varepsilon$ of Equation 1 above is 2%, the crack density value calculated according to Equation 1 above is 0, so that it can have durability by which cracks do not occur even under external mechanical stimulation.

In another embodiment, the functional conductive layer 210 may have, at a tensile strain of 1% to 10%, a surface resistance increase rate calculated according to Equation 2 below of 15% or less and preferably 0% to 14%.

[Equation 2]

$$\delta(\varepsilon) = [\{R.S(\varepsilon)/R.S(0)\}\text{-}1] * 100$$

In Equation 2 above, $\delta(\varepsilon)$ is the surface resistance increase rate (%) of the functional conductive layer calculated at the tensile strain $\varepsilon$, $R.S(\varepsilon)$ is the surface resistance value ($\Omega/\square$) of the functional conductive layer measured at the tensile strain $\varepsilon$, $R.S(0)$ is the surface resistance value ($\Omega/\square$) of the functional conductive layer measured at the initial state where the tensile strain is 0%, and $\varepsilon$ represents the same meaning as in Equation 1.

In the case where the functional conductive layer 210 has, at a tensile strain of 1% to 10%, the surface resistance increase rate calculated according to Equation 2 above that satisfies the above range, it is advantageous in that it can prevent the surface resistance from increasing excessively due to external stress changes, and thus enables stable operation even when external stress changes.

In one embodiment, the optical laminate is preferable in that it has a solar energy blocking rate of 60% or more as measured according to the optical performance test method KS L 2016:2014, 6.3, so that it can prevent reflection and reduce energy consumption while absorbing or blocking light in the infrared region of sunlight without causing any interference with necessary lighting.

### Optical functional layer 110

Referring to FIG. 2, the first optical functional layer 110-1 and the second optical functional layer 110-2 may be formed facing each other with respect to the liquid crystal layer 120, and the optical functional layer 110 may include a substrate layer 220 and a functional conductive layer 210 on both surfaces of the substrate layer. The optical functional layer 110 may be included on both surfaces of the liquid crystal layer to impart optical properties such as a blocking rate, an absorption rate, or a reflectance in the infrared region. More specifically, the optical functional layer 110 basically has a function as an electrode by including a conductive polymer such as poly(3,4-ethylenedioxythiophene) (PEDOT), etc., and thus can adjust the liquid crystal of the liquid crystal layer to an ON or OFF state by an applied voltage. In addition, a heat-blocking function can be imparted by utilizing the characteristic of absorbing energy in the infrared region of the conductive polymer, and when the optical functional layer 11o is produced with an optical laminate structure according to the present disclosure, infrared rays can be blocked by about 60% or more, preferably 70% or more, and light in the visible light region can be reflected to reduce the reflectance in the visible light region to 10% or less, preferably 5% or less, thereby imparting a low-reflection effect also.

### Functional conductive layer 210

The functional conductive layer 210 is provided to drive the liquid crystal layer 120 by being applied instead of the conductive layer of the existing optical laminate, and may be formed directly without including a separate substrate between the functional conductive layer 21 and the substrate layer 220. The optical laminate 100 used in the manufacture of conventional smart windows, etc., was manufactured by forming a conductive layer for driving the liquid crystal on one surface of the substrate and bonding the other surface of the substrate with a polarizing plate. However, the liquid crystal laminate according to the present disclosure is characterized by improving the transmittance and flexural characteristics in the light transmission mode while reducing the thickness of the laminate by not including a separate substrate for forming the conductive layer or by directly forming the conductive layer on one surface of the substrate layer. According to another embodiment of the present disclosure, the functional conductive layer 210 may be formed by directly contacting the substrate layer by including a highly adhesive layer (not shown) between the functional conductive layer 210 and the substrate layer. The above-mentioned highly adhesive layer may use materials used in the pressure sensitive adhesive/adhesive layer among other members described later, but is not limited thereto.

The functional conductive layer 210 may have a visible light transmittance of 50% or more, and preferably, may include a conductive polymer. In addition, the functional conductive layer may be prepared of a functional conductive layer composition including: a conductive polymer; and one or more selected from the group consisting of an organic binder, an organic solvent, a silane coupling agent, and a surfactant, and may further include a residual amount of water according to the needs of the user. In this case, heat energy shielding can be adjusted by absorbing light in the infrared region of solar energy. Accordingly, energy consumption for heating and cooling can be reduced, thereby improving economic feasibility of energy. In addition, even if deformation due to external stress is applied to the functional conductive layer 210, cracks can be prevented from occurring, and further, surface resistance can be prevented from increasing excessively.

The conductive polymer may use a conventional or later-developed conductive polymer material, and the conductive polymer may include, for example, one or more selected from the group consisting of polythiophene, poly(3,4-ethylenedioxythiophene), polyaniline, polyacetylene, polydiacetylene, polyphenylene, polyphenylenevinylene, polyphenylene sulfide, polythienylenevinylene, polythiophenevinylene, polyfluorene, polypyrrole, poly(3,4-ethylenedioxythiophene):polystyrenesulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrenesulfonate, polythiophene:camphorsulfonic acid, polythiophene:toluenesulfonic acid, and polythiophene:dodecylbenzenesulfonic acid, and preferably, it may be poly(3,4-ethylenedioxythiophene) (PEDOT) or poly(3,4-ethylenedioxythiophene):poly(styrenesulfonate) (PEDOT:PSS). In particular, PEDOT:PSS is more preferable because it is a conductive polymer with an electron-donating effect. This characteristic is affected by the substituent bonded to the polymer. The substituent of PEDOT:PSS has a relatively low energy band gap, and this band gap exists in the infrared region, so it can absorb infrared rays.

The content of the conductive polymer is not particularly limited, but the conductive polymer may be contained in an amount of 0.1% by weight to 5% by weight, and preferably, 0.2% by weight to 3% by weight, based on the total weight of the functional conductive layer composition.

The organic binder may include one or more selected from the group consisting of a melamine resin, a polyester resin, a polyurethane resin, and a polyacrylic resin. In addition, the organic binder may be a water-dispersible resin. In one embodiment, the organic binder may have a weight average molecular weight of 5,000 g/mol to 30,000 g/mol, and preferably, 10,000 g/mol to 20,000 g/mol.

The content of the organic binder is not particularly limited, but the organic binder may be contained in an amount of 1% by weight to 40% by weight, based on the total weight of a functional conductive layer forming composition. Preferably, it may be contained in an amount of 5% by weight to 35% by weight, and more preferably, it may be contained in an amount of 8% by weight to 33% by weight.

The organic solvent may include an alcohol-based organic solvent, an ether-based organic solvent, and/or an amide-based organic solvent.

The alcohol-based organic solvent serves to lower the surface tension of the functional conductive layer forming composition and improve the coatability. In one embodiment, the alcohol-based organic solvent may be an alcohol having 1 to 4 carbon atoms, and for example, methanol, ethanol, 2-methoxyethanol, propanol, isopropanol, n-butyl alcohol, etc. may be used.

The ether-based organic solvent may use a conventional or later-developed ether-based organic solvent, and for example, propylene glycol monopropyl ether, propylene glycol monomethyl ether, ethylene glycol monomethyl ether, ethylene glycol monoethyl ether, ethylene glycol monopropyl ether, ethylene glycol monobutyl ether, diethylene glycol monomethyl ether, diethylene glycol monoethyl ether, diethylene glycol monopropyl ether, diethylene glycol monobutyl ether, diethylene glycol-2-ethylhexyl ether, and the like may be used.

The amide-based organic solvent serves to improve the conductivity of the manufactured functional conductive layer. In one embodiment, the amide-based organic solvent may use acetamide, N-methylacetamide, N-dimethylacetamide, N-methylpyrrolidone, and the like.

The content of the organic solvent is not particularly limited, but the organic solvent may be contained in an amount of 10% by weight to 80% by weight, preferably, 15% by weight to 65% by weight, and more preferably, 20% by weight to 60% by weight based on the total weight of the conductive layer forming composition.

The silane coupling agent improves the adhesiveness of the functional conductive layer forming composition, thereby serving to facilitate the lamination of the functional conductive layer 210 on the substrate layer 220. In one embodiment, the silane coupling agent may include one or more selected from the group consisting of trimethoxy-based silane, triethoxy-based silane, tetramethoxy-based silane and tetraethoxy-based silane, and for example, triethoxy-based silane may be 2-(3,4-epoxycyclohexyl)ethyltriethoxy silane, (3-aminopropyl)triethoxy silane, (pentafluorophenyl) triethoxy silane, (3-glycidyloxypropyl)triethoxy silane or (4-chlorophenyl)triethoxy silane, and trimethoxy-based silane may be (3-glycidyloxypropyl)trimethoxy silane, (3-chloropropyl)trimethoxy silane, (3-mercaptopropyl)trimethoxy silane, (3-glycidyloxypropyl)trimethoxy silane, (3-aminopropyl)trimethoxy silane, [3-(2-aminoethylamino)propyl]trimethoxy silane, (N,N-dimethylaminopropyl)trimethoxy silane, (3-bromopropyl)trimethoxy silane) or (3-iodopropyl)trimethoxy silane.

The silane coupling agent may be contained in an amount of 0.05% by weight to 0.3% by weight based on the total weight of the functional conductive layer forming composition, in terms of improving the adhesion between the substrate layer 220 and the functional conductive layer 210.

The surfactant may be a silicone-based surfactant or an acetylene-based surfactant, and the silicone-based surfactant may be a modified silicone-based surfactant.

For example, a commercial product of the silicone-based surfactant may include BYK-378, etc. from BYK, and a commercial product of the acetylene-based surfactant may include Dynol 604, etc. from Air Products.

The content of the surfactant is not particularly limited, but the surfactant may be contained in an amount of 0.02% by weight to 0.4% by weight, preferably, 0.1% by weight to 0.4% by weight based on the total weight of the functional conductive layer forming composition.

In one embodiment of the present disclosure, the functional conductive layer forming composition may be applied to a substrate layer 220 to be described later and then dried in an oven under temperature conditions of 60 to 90°C for 5 to 10 minutes to form the functional conductive layer 210, but the functional conductive layer 210 is not limited thereto and may be formed by a method commonly used in the field. For example, the functional conductive layer may be formed by selecting appropriate processes from processes including: a coat process such as a spin coat method, a roller coat method, a bar coat method, a dip coat method, a gravure coat method, a curtain coat method, a die coat method, a spray coat method, a doctor coat method, a kneader coat method, etc.; a printing process such as a screen printing method, a spray printing method, an inkjet printing method, a lithographic printing method, a plate printing method, a flat printing method, etc.; a deposition process such as an IML (In-Mold Labeling) injection method, a CVD (chemical vapor deposition) method, a PVD (physical vapor deposition) method, a PECVD (plasma enhanced chemical vapor deposition) method, etc.; and dry or wet plating processes.

In one embodiment, the functional conductive layers 210 may each have a thickness of 1.0 to 3.0 $\mu$m, preferably 1.5 to 3 $\mu$m, and since the functional conductive layers 210 are formed on both surfaces of the substrate layer 220 with the substrate layer 220 being formed between the functional conductive layers, the sum of the thicknesses of the functional conductive layers formed on both surfaces may be preferably 3 to 6 $\mu$m. In this case, the functional conductive layer 210 secures a predetermined transmittance, does not significantly change in properties due to external stress, and enables the manufacture of a thin electrode film. If the above range is exceeded, the adhesion between the substrates may decrease, and the compactness inside the functional conductive layer 210 may decrease, which may result in a disadvantage of weakened durability, such as easy cracking due to external impact and/or external environmental conditions.

At this time, when a functional conductive layer is provided on one surface of the substrate layer 220, there is a limit to absorbing and blocking light in the infrared region, and even if the thickness of the functional conductive layer increases, the absorption rate and blocking rate do not increase, so that providing a functional conductive layer on each of both surfaces of the substrate layer 220 is effective in absorbing and blocking light in the infrared region.

### Substrate layer 220

The substrate layer 220 is a structural base for forming a functional conductive layer 210, and is not particularly limited as long as the transmittance satisfies the above range.

According to one embodiment, the substrate layer 220 may preferably include one or more selected from the group consisting of a cycloolefin resin, a cellulose resin, an acrylate-based resin, a polyester resin, and a polycarbonate resin, and may be, for example, polyethylene terephthalate (PET), polyethylene naphthalate (PEN), polycarbonate (PC), polymethyl methacrylate (PMMA), cyclic olefin polymer (COP), triacetyl cellulose (TAC), etc.

In one embodiment, the substrate layer 220 may have a thickness of 50 $\mu$m to 150 $\mu$m. If the transparent substrate layer 220 has a thickness of less than 50 $\mu$m, problems such as not properly supporting the functional conductive layer 210 described above may occur, and if it has a thickness exceeding 150 $\mu$m, problems such as a decrease in transmittance or flexibility of the transparent electrode film may occur since the thickness of the entire film increases due to excessive thickness.

In one embodiment, in order to improve the adhesive force between the functional conductive layer 210 and the substrate layer 220, a surface treatment may be performed on one surface or both surfaces of the substrate layer 220. The surface treatment is not particularly limited as long as it is for improving the adhesive force between the functional conductive layer 210 and the substrate layer 220, and for example, a pretreatment process such as corona treatment, plasma treatment, ultraviolet irradiation, or primer treatment may be used. When the surface treatment is performed on one surface or both surfaces of the substrate layer 220, the adhesive force between the functional conductive layer 210 and the substrate layer 220 is further improved, so that the functional conductive layer 210 can be easily formed on the transparent substrate layer 220 without separately including an optically clear adhesive (OCA) film, etc., which may provide advantages in terms of improved transmittance, etc.

According to another embodiment of the present disclosure, the substrate layer 220 may include a polarizer, and may include, for example, a first polarizing plate including a polarizer and a second polarizing plate being oppositely directed to the first polarizing plate and including a polarizer.

Referring to FIG. 3, the polarizing plate 300 may include a polarizer and further include functional layers such as a protective film 320, a retardation matching layer (not shown), and a refractive index-matching layer (not shown) on one or both surfaces of the polarizer. For example, the polarizing plate 300 may include a polarizer 310 and a protective film 320 laminated on one or both surfaces of the polarizer, and may include a polarizer 310, a protective film 320 laminated on one surface of the polarizer, and a retardation matching layer laminated on the other surface of the polarizer opposite to the one surface. In addition, it may include a polarizer 310, a protective film 320 laminated on one surface of the polarizer, and a retardation matching layer and a refractive index-matching layer sequentially laminated on the other surface of the polarizer opposite to the one surface, and it may include a polarizer 310, a protective film 320 laminated on one surface of the polarizer, and a protective film 320 and a retardation matching layer sequentially laminated on the other surface of the polarizer opposite to the one surface.

The polarizer 310 may use a conventional or later-developed polarizer, and for example, a stretchable polarizer or a coating-type polarizer may be used.

In one embodiment, the stretchable polarizer may include a stretched polyvinyl alcohol (PVA)-based resin. The polyvinyl alcohol (PVA)-based resin may be a polyvinyl alcohol-based resin obtained by saponifying a polyvinyl acetate resin. The polyvinyl acetate resin, in addition to polyvinyl acetate, which is a homopolymer of vinyl acetate, may include a copolymer or the like of vinyl acetate and another monomer copolymerizable therewith. The other monomer may be an unsaturated carboxylic acid-based monomer, an unsaturated sulfonic acid-based monomer, an olefin-based monomer, a vinyl ether-based monomer, an acrylamide-based monomer having an ammonium group, and the like. In addition, the polyvinyl alcohol (PVA)-based resin may include a modified one, and for example, it may be polyvinyl formal or polyvinyl acetal modified with aldehydes.

In one embodiment, the coating-type polarizer may be formed by a liquid crystal coating composition, and at this time, the liquid crystal coating composition may include a reactive liquid crystal compound and a dichroic dye, etc.

The above reactive liquid crystal compound may refer to a compound that includes, for example, a mesogen skeleton, and also includes one or more polymerizable functional groups. These reactive liquid crystal compounds are known in various ways under the name of so-called RM (Reactive Mesogen). The above reactive liquid crystal compound may form a cured film in which a polymer network is formed while maintaining a liquid crystal arrangement by polymerization by light or heat.

The above reactive liquid crystal compound may be a monofunctional or polyfunctional reactive liquid crystal compound. The monofunctional reactive liquid crystal compound is a compound having one polymerizable functional group, and the polyfunctional reactive liquid crystal compound may refer to a compound having two or more polymerizable functional groups.

The above dichroic dye is a component that is included in a liquid crystal coating composition to impart polarization characteristics, and has properties in which the absorbance in the long-axis direction of the molecule and the absorbance in the short-axis direction are different. The above dichroic dye may be a dichroic dye that has been developed in the past or will be developed in the future, and may include, for example, at least one selected from the group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The above liquid crystal coating composition may further include a solvent capable of dissolving the reactive liquid crystal compound and the dichroic dye, and examples thereof include propylene glycol monomethyl ether acetate (PGMEA), methyl ethyl ketone (MEK), xylene, and chloroform. In addition, the liquid crystal coating composition may further include a leveling agent, a polymerization initiator, and the like, within a range that does not impair the polarization characteristics of the coating film.

The protective film 320 is intended to preserve the polarization properties of the polarizer from post-process and external environments, and may be implemented in the form of a protective film, etc.

The protective film 320 may be formed by directly contacting one or both surfaces of the polarizer, but is not limited thereto. For example, the protective film 320 may be used as a multi-layer structure in which one or more protective films 320 are continuously laminated, may be formed by directly contacting another functional layer, and if the protective film 320 is formed by directly contacting another functional layer in order to protect any other substrate of the optical laminate, its location is not limited.

In one or more embodiments, the protective film 320 may contain one or more selected from the group consisting of polyethylene terephthalate (PET), polyethylene isophthalate (PEI), polyethylene naphthalate (PEN), polybutylene terephthalate (PBT), diacetyl cellulose (cellulose diacetate (CDA)), triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and a cyclic olefin polymer (COP).

The retardation matching layer (not shown) is intended to complement the optical properties of the optical laminate, and can be implemented in the form of a retardation film, etc., and a conventional or later-developed retardation film, etc. can be used. For example, a quarter-wave plate (1/4 wave plate), a half-wave plate (1/2 wave plate), or the like for delaying the phase of light can be used, and these can be used alone or in combination.

The retardation matching layer can be formed by directly contacting one surface of a polarizer, but is not limited thereto. For example, the retardation matching layer is formed on one surface of a protective film 320 so that the polarizer, the protective film 320, and the retardation matching layer may be sequentially laminated.

The retardation matching layer may use a polymer stretched film or a liquid crystal polymer film in which a polymer film that can impart optical anisotropy is stretched by stretching in an appropriate manner.

In one embodiment, the polymer stretched film may use a polymer layer including a polyolefin such as polyethylene (PE) or polypropylene (PP), a cycloolefin polymer (COP) such as polynorbornene, a polyester such as polyvinyl chloride (PVC), polyacrylonitrile (PAN), polysulfone (PSU), an acryl resin, polycarbonate (PC), or polyethylene terephthalate (PET), a cellulose ester-based polymer such as polyacrylate, polyvinyl alcohol (PVA), or triacetyl cellulose (TAC), or a copolymer of two or more monomers among the monomers forming the polymer.

The method for obtaining the polymer stretched film is not particularly limited, and for example, the polymer stretched film may be obtained by forming the polymer material into a film form and then stretching it. The method for forming the polymer material into a film form is not particularly limited, and it is possible to form the polymer material into a film by known methods such as injection molding, sheet molding, blow molding, injection blow molding, inflation molding, extrusion molding, foam molding, and cast molding, and secondary processing molding methods such as pressure molding and vacuum molding may also be used. Among them, extrusion molding and cast molding are preferably used. At this time, for example, an extruder or the like having a T-die, a circular die, etc. mounted thereon may be used to perform extrusion molding of an unstretched film. When obtaining a molded product by extrusion molding, a material in which various resin components, additives, etc. are melt-mixed in advance may be used or the unstretched film may also be molded through melt-mixing during extrusion molding. In addition, a solvent common to various resin components, for example, a solvent such as chloroform, methylene dichloride, or the like may be used to dissolve various resin components, and then cast and dry-solidified, thereby cast-forming an unstretched film.

The polymer stretched film may be provided by performing uniaxial stretching on the formed film in a mechanical direction (MD, longitudinal or lengthwise direction), and by performing uniaxial stretching in a transverse direction (TD, or widthwise direction) perpendicular to the MD. Alternatively, a biaxially stretched film may be manufactured by performing stretching by a sequential biaxial stretching method of roll stretching and tenter stretching, a simultaneous biaxial stretching method by tenter stretching, a biaxial stretching method by tubular stretching, etc. to enable a biaxially stretched film to be manufactured.

The liquid crystal polymerization film may include a reactive liquid crystal compound in a polymerized state. The above description of the reactive liquid crystal compound of the coating-type polarizer may be equally applied to the reactive liquid crystal compound.

In one or more embodiments, the retardation matching layer may have a thickness of 10 $\mu$m to 100 $\mu$m in the case of a polymer stretched film, and 0.1 $\mu$m to 5 $\mu$m in the case of a liquid crystal polymer film.

The refractive index-matching layer (not shown) is provided to compensate for the refractive index difference of the liquid crystal layer 120 due to the functional conductive layer 210, and may serve to improve visibility properties, etc. by reducing the refractive index difference. In addition, the refractive index-matching layer may be provided to correct the color caused by the functional conductive layer 210. Meanwhile, in the case where the functional conductive layer 210 has a pattern, the difference in transmittance between the pattern area where the pattern is formed and the non-pattern area where the pattern is not formed can be compensated for through the refractive index-matching layer.

Specifically, the functional conductive layer 210 is laminated adjacent to another member (e.g., a polarizer, etc.) having a refractive index that is different therefrom, and a difference in light transmittance may be induced due to a difference in refractive index with respect to the adjacent other layer. In particular, when a pattern is formed on the transparent conductive layer, a problem may occur in which the pattern area and the non-pattern area are visible such that they may be distinguished. Therefore, the difference in light transmittance of the optical laminate can be reduced by including the refractive index-matching layer so that the refractive index is compensated for, and in particular, when a pattern is formed on the functional conductive layer 210, the pattern area and the non-pattern area may not be distinguished and visible.

In one embodiment, the refractive index of the refractive index-matching layer may be appropriately selected depending on the material of the adjacent other member, but may be preferably 1.4 to 2.6, and more preferably 1.4 to 2.4. In this case, light loss due to a sharp refractive index difference between the other member such as the polarizer or the like and the functional conductive layer 210 can be prevented.

The refractive index-matching layer is not particularly limited as long as it can prevent a sharp refractive index difference between the other member such as the polarizer or the like and the transparent conductive layer 231, 232, and a compound used in the formation of a conventional or later-developed refractive index-matching layer can be used, and for example, it may be formed from a refractive index-matching layer forming composition including a polymerizable isocyanurate compound.

In one embodiment, the polarizing plate 300 may further include, in addition to the functional layer described above, another functional layer to assist or enhance the properties of the polarizer, and for example, may further include an overcoat layer, etc. to further enhance mechanical durability.

In one or more embodiments, the polarizing plate 300 may have a thickness of 100 to 200 $\mu$m, preferably 100 to 190 $\mu$m, and more preferably 120 to 150 $\mu$m. In this case, the polarizing plate 300 can be manufactured as a thin substrate layer 220 while maintaining optical properties.

## Liquid crystal layer 120

The liquid crystal layer 120 can change the driving mode of the optical laminate by adjusting the transmittance of light incident in one or more directions according to an electric field, and, for example, can be located within a space provided by a sealant layer (not shown) and a spacer (not shown) provided between the first polarizing plate and the second polarizing plate in the light control region.

The liquid crystal layer 120 is not particularly limited as long as it is driven by an electric field and can control the light transmittance, and a conventional or later-developed liquid crystal compound can be used, and for example, the contents regarding the reactive liquid crystal compound of the above-described coating-type polarizer can be applied equally.

The liquid crystal behavior method of the liquid crystal layer 120 is not particularly limited, and for example, a twisted nematic (TN) mode, a super twisted nematic (STN) mode, a vertical alignment (VA) mode, etc. may be used. Depending on the substrate applied to the substrate layer 220, the liquid crystal layer 120 can selectively employ one of polarizing film-liquid crystals (POL-LC) driven by a polarizing plate due to the polarization properties of the polarizing plate, or polymer dispersed liquid crystals (PDLC). For example, when a polymer resin such as a polyester resin is applied in order to adjust transparency according to the application of voltage, it is driven through the PDLC mode, and when a polarizing plate is applied, the driving principle of the POL-LC mode is adopted. A smart window employing the PDLC mode and POL-LC mode can impart heat blocking and/or reflection reduction effects by attaching a separate film or coating the glass, but according to one embodiment of the present disclosure, it can be manufactured as an integral body without a separate film, thereby enabling the manufacturing process to be simplified compared to the conventional one while securing an equivalent level of heat blocking rate and/or reflectance control characteristics.

The sealant (not shown) may include a curable resin as a base resin. As the base resin, an ultraviolet-curable resin or a thermosetting resin known in the art as one that may be usable for a sealant in the art may be used. The ultraviolet-curable resin may be a polymer of an ultraviolet-curable monomer. The thermosetting resin may be a polymer of a thermosetting monomer. For example, an acrylate-based resin, an epoxy-based resin, a urethane-based resin, a phenol-based resin, or mixtures of the resins may be used as the base resin of the sealant. In one embodiment, the base resin may be an acrylate-based resin, and the acrylate-based resin may be a polymer of an acrylic monomer. The acrylic monomer may be, for example, a polyfunctional acrylate. In another embodiment, the sealant may further include a monomer component in the base resin. The monomer component may be, for example, a monofunctional acrylate. In this specification, the monofunctional acrylate may mean a compound having one acrylic group, and the polyfunctional acrylate may mean a compound having two or more acrylic groups. The curable resin may be cured by irradiation with ultraviolet rays and/or heating. The ultraviolet irradiation conditions or heating conditions may be appropriately performed within a range that does not impair the purpose of the present application. The sealant may further include an initiator, for example, a photoinitiator or a thermal initiator, if necessary. The sealant may be formed by a method commonly used in the art, and may be formed, for example, by drawing the sealant onto the outer surface (i.e., the inactive area) of the liquid crystal layer using a dispenser having a nozzle.

The spacer (not shown) may include at least one spacer of a ball spacer and a column spacer, and particularly preferably is a ball spacer. The ball spacer may be one or more, and is preferably 1 to 10 $\mu$m in diameter. In addition, when viewed in a planar direction, the area occupied by the ball spacer in the liquid crystal layer 120 is preferably 0.01 to 10% with respect to the area of the liquid crystal layer 120 in terms of user visibility and transmittance improvement in a light-transmitting mode.

In one embodiment, the liquid crystal layer 120 may further include an alignment film as needed, and may be formed on both surfaces of the liquid crystal layer 120 containing a liquid crystal compound, for example.

The alignment film (not shown) is not particularly limited as long as it is for adding alignment properties to the liquid crystal compound. For example, the alignment film may be produced by applying and curing an alignment film coating composition including an alignment polymer, a photopolymerization initiator, and a solvent. The alignment polymer is not particularly limited, but may include a polyacrylate-based resin, a polyamic acid resin, a polyimide-based resin, a polymer including a cinnamate group, and the like, and a conventional or later-developed polymer capable of exhibiting alignment properties may be used.

## Other members

The optical laminate of the present disclosure may further include other members within a range that does not impair the purpose of the present disclosure, for example, it may further include a protective film 320 and a pressure sensitive adhesive/adhesive layer 130 (see FIGS. 1, 5, and 6), and may further include a UV absorbing layer, a hard coating layer, etc.

Since the contents of the protective film of the above-described substrate layer can be applied as equally to the protective film 320, the description thereof will be omitted.

The pressure sensitive adhesive/adhesive layer 130 may be formed using an adhesive or a pressure sensitive adhesive, and it is preferable that it has an appropriate pressure sensitive adhesive/adhesive force so that peeling, bubbles, etc. do not occur when handling the optical laminate, and at the same time, it has transparency and thermal stability.

The adhesive may use a conventional or later-developed adhesive, and for example, a photocurable adhesive may be used.

The photocurable adhesive exhibits strong adhesive force by being crosslinked and cured by receiving active energy rays such as ultraviolet (UV) rays, electron beams (EB), etc., and may be composed of a reactive oligomer, a reactive monomer, a photopolymerization initiator, etc.

The reactive oligomer is an important component determining the properties of the adhesive, and forms a cured film by forming a polymer bond by a photopolymerization reaction. Usable reactive oligomers include polyester-based resins, polyether-based resins, polyurethane-based resins, epoxy-based resins, polyacrylic resins, silicone-based resins, etc.

The reactive monomers play a role of crosslinkers and diluents of the above-mentioned reactive oligomers and affect the adhesive properties. Usable reactive monomers may include monofunctional monomers, polyfunctional monomers, epoxy-based monomers, vinyl ethers, cyclic ethers, etc.

The photopolymerization initiator absorbs light energy to generate radicals or cations, thereby playing a role of initiating photopolymerization, and an appropriate one may be selected and used depending on the photopolymerization resin.

The pressure sensitive adhesive may use a conventional or later-developed pressure sensitive adhesive, and in one or more embodiments, an acrylic pressure sensitive adhesive, a rubber-based pressure sensitive adhesive, a silicone-based pressure sensitive adhesive, a urethane-based pressure sensitive adhesive, a polyvinyl alcohol-based pressure sensitive adhesive, a polyvinyl pyrrolidone-based pressure sensitive adhesive, a polyacrylamide-based pressure sensitive adhesive, a cellulose-based pressure sensitive adhesive, a vinyl alkyl ether-based pressure sensitive adhesive, etc. may be used. The pressure sensitive adhesive is not particularly limited as long as it has pressure sensitive adhesive force and viscoelasticity, but in terms of ease of acquisition, etc., it may be preferably an acrylic pressure sensitive adhesive, and it may include, for example, a (meth)acrylate copolymer, a crosslinking agent, a solvent, etc.

The crosslinking agent may use a conventional or later-developed crosslinking agent, and may include, for example, a polyisocyanate compound, an epoxy resin, a melamine resin, a urea resin, dialdehydes, a methylol polymer, etc., and preferably, a polyisocyanate compound.

The solvent may include a common solvent used in the field of resin compositions, and for example, solvents such as: alcohol-based compounds such as methanol, ethanol, isopropanol, butanol, propylene glycol methoxy alcohol, etc.; ketone-based compounds such as methyl ethyl ketone, methyl butyl ketone, methyl isobutyl ketone, diethyl ketone, dipropyl ketone, etc.; acetate-based compounds such as methyl acetate, ethyl acetate, butyl acetate, propylene glycol methoxy acetate, etc.; cellosolve-based compounds such as methyl cellosolve, ethyl cellosolve, propyl cellosolve, etc.; and hydrocarbon-based compounds such as hexane, heptane, benzene, toluene, xylene and etc. may be used. These may be used alone or in combination of two or more.

The thickness of the pressure sensitive adhesive/adhesive layer 130 may be appropriately determined depending on the type of resin that plays a role of the pressure sensitive adhesive, the pressure sensitive adhesive/adhesive strength, the environment in which the pressure sensitive adhesive/adhesive is used, etc. In one embodiment, the pressure sensitive adhesive/adhesive layer may have a thickness of 0.01 to 50 $\mu$m, preferably 0.05 to 20 $\mu$m, and more preferably 0.1 to 10 $\mu$m, in order to secure sufficient pressure sensitive adhesive/adhesive force and minimize the thickness of the optical laminate.

The ultraviolet-absorbing layer is not particularly limited as long as it is for preventing deterioration of the optical laminate due to ultraviolet rays, and for example, salicylic acid-based ultraviolet absorbers (phenyl salicylate, p-tert-butyl salicylate, etc.), benzophenone-based ultraviolet absorbers (2,4-dihydroxybenzophenone, 2,2'-dihydroxy-4,4'-dimethoxybenzophenone, etc.), benzotriazole-based ultraviolet absorbers (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimidemethyl)-5'-methylphenyl)benzotriazole, 2,2-methylenebis(4-(1,1,3,3-tetramethylbutyl)-6-(2H-benzotriazol-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxycarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazol-2-yl)-6-(linear and branched dodecyl)-4-methylphenol, a mixture or the like) of octyl-3-[3-tert-butyl-4-hydroxy-5-(chloro-2H-benzotriazol-2-yl)phenyl]propionate and 2-ethylhexyl-3-[3-tert-butyl-4-hydroxy-5-(5-chloro-2H-benzotriazol-2-yl)phenyl]propionate, cyanoacrylate-based ultraviolet absorbers (2'-ethylhexyl-2-cyano-3,3-diphenylacrylate, ethyl-2-cyano-3-(3',4'-methylenedioxyphenyl)-acrylate, etc.), triazine-based ultraviolet absorbers, etc., may be used, and benzotriazole-based ultraviolet absorbers or triazine-based ultraviolet absorbers that have high transparency and are excellent in preventing deterioration of polarizing plates or layers are preferred, and benzotriazole-based ultraviolet absorbers having more appropriate spectral absorption spectra are particularly preferred. The benzotriazole-based ultraviolet absorbers may be bis-based, and may be, for example, 6,6'-methylenebis(2-(2H-benzo[d][1,2,3]triazol-2-yl)-4-(2,4,4-trimethylpentan-2-yl)phenol), 6,6'-methylenebis(2-(2H-benzo[d][1,2,3]triazol-2-yl)-4-(2-hydroxyethyl)phenol), etc.

The hard coating layer is not particularly limited as long as it is for protecting a member such as a polarizing plate, a layer, etc. from external physical or chemical impacts, and a conventional or later-developed hard coating layer may be used.

In one embodiment, the hard coating layer may be formed by applying a hard coating layer forming composition on another member and then curing it with light or heat. The hard coating layer forming composition is not particularly limited, and may include, for example, a photocurable compound and a photoinitiator.

The photocurable compound and photoinitiator that are commonly used in the art may be used without limitation, the photocurable compound may be, for example, a photopolymerizable monomer, a photopolymerizable oligomer, etc., and examples of the photocurable compound may include monofunctional and/or polyfunctional (meth)acrylates, and examples of the photoinitiator may include an oxime ester-based photoinitiator, etc.

<ins>**Method for Manufacturing an Optical Laminate**</ins>

The present disclosure includes a method for manufacturing the above-described optical laminate. The method for manufacturing the optical laminate is not particularly limited, and the optical laminate can be manufactured using any bonding technique, the photolithography technique described above, etc.

For example, a conductive layer in the polarizing plate can be formed by coating a functional conductive layer-forming composition on a triacetyl cellulose film or a cycloolefin polymer (COP) and then bonding it to a polyvinyl alcohol-based polarizer, and it may be formed by selectively coating a functional conductive layer composition on the triacetyl cellulose film or the cycloolefin film surface of a polarizing plate manufactured by bonding each of a triacetyl cellulose film or a triacetyl cellulose film and a cycloolefin film through an adhesive on both surfaces of a polyvinyl alcohol-based polarizer (23 $\mu$m, KURARAY).

**<Smart Window>**

The present disclosure includes a smart window including the optical laminate in addition to the optical laminate. In addition, the present disclosure includes an automobile in which the smart window is applied to at least one of a front window, a rear window, a side window, a sunroof window, and an internal partition, and a building window including the smart window.

Referring to FIG. 5, the automobile including the smart window of the present disclosure may be one in which glass for vehicle 141 is bonded to both surfaces of the optical laminate including the liquid crystal layer 120 and the optical functional layer 110 using a pressure sensitive adhesive/adhesive layer 130. For example, it may be manufactured by placing an adhesive film and glass for vehicle on both surfaces of the optical laminate, followed by heating for 10 to 20 minutes at a temperature of 90°C and in about an 1 bar or vacuum state using a press machine, or may be manufactured by coating a resin on one surface of the glass for vehicle, and then vacuum bonding the glass for vehicle to both surfaces of the optical laminate and UV curing the same. The adhesive film may include an ethylene vinyl acetate (EVA) film, a polyvinyl butyral (PVB) film, or the like, and the resin may include an OCR resin or the like having a storage modulus (G') of $10^3$ to $10^5$ Pa.

In addition, a building window (glass for window) 142 may be bonded onto one surface or both surfaces of the optical laminate (see FIG. 6), a smart window product for window may be manufactured by bonding glass for window onto one surface of the optical laminate in a laminated manner, and a smart window product for window having the same configuration as FIG. 6 may be manufactured by applying and bonding glass for window onto both surfaces of the optical laminate using UV adhesive and then UV curing.

**[Mode for Carrying Out the Invention]**

Hereinafter, the present disclosure will be described in more detail based on examples, but the embodiments of the present disclosure disclosed below are merely illustrative, and the scope of the present disclosure is not limited to these embodiments. The scope of the present disclosure is indicated in the claims, and furthermore, it includes all modifications within the meaning and scope equivalent to the claims. In addition, "%" and "part" indicating the content in the following Examples and Comparative Examples are based on weight unless specifically stated.

**<Preparation Example>**

**Preparation Example 1: Preparation of a functional conductive layer composition**

A functional conductive layer composition was prepared using a mixture in which 0.6% by weight of poly(3,4-ethylenedioxythiophene):polystyrenesulfonate (PEDOT:PSS, Clevios™, Heraeus), 32.5% by weight of ethanol, 40% by weight of deionized water, and 27% by weight of 2-methoxyethanol were mixed.

**Preparation Example 2: Manufacturing of a polarizing plate**

A polarizing plate was manufactured by bonding a triacetyl cellulose film (40 $\mu$m to 60 $\mu$m TAC, Konica) to each of both surfaces of a polyvinyl alcohol-based polarizer (23 $\mu$m, KURARAY) via an adhesive.

In the polarizing plate, the conductive layer was formed by coating a functional conductive layer forming composition on the triacetyl cellulose film and then bonding it to a polyvinyl alcohol-based polarizer. At this time, when coating the conductive layer, it was dried at 90°C for about 10 minutes to form a functional conductive layer having a thickness of 3 $\mu$m, thereby preparing an optical functional layer of Example including a functional conductive layer formed of a conductive polymer on one surface of the polarizing plate.

**<Examples and Comparative Examples: Manufacturing of Optical Laminates>**

**Examples 1 to 3**

A first optical functional layer was formed by coating a functional conductive layer forming composition according to Preparation Example 1 on both surfaces of polyethylene terephthalate (PET, XG7PH8 Toray) having a thickness of 50 $\mu$m as a substrate film, and then drying the functional conductive layer forming composition in an oven (PR-4J, ESPEC) at 90°C for 10 minutes so that the substrate layer had a thickness of 3.0 $\mu$m after curing the functional conductive layer forming composition at 90°C for 10 minutes.

The second optical functional layer was formed in the same manner as the first optical functional layer except that the functional conductive layer forming composition was coated on one surface or both surfaces of the substrate layer so that the functional conductive layer forming composition had a thickness of 1.0 $\mu$m or 3.0 $\mu$m after curing it at 90°C for 10 minutes, respectively. Specifically, the thickness of the second optical functional layer and whether it was coated on one surface or both surfaces were as described in Table 1, and a second optical functional layer was formed by drying the composition at 90°C for 10 minutes in an oven (PR-4J, ESPEC) in order to coat the composition. The optical laminates of Examples 1 to 3 were each manufactured by injecting a liquid crystal and a polymer-dispersed liquid crystal between the first optical functional layer and the second optical functional layer, which include a functional conductive layer coated on a substrate.

**Examples 4 to 6**

A polarizing plate manufactured according to the Preparation Example 2 above as a substrate film was coated with the functional conductive layer composition according to Preparation Example 1 above on both surfaces thereof so that the composition has a thickness of 3.0 $\mu$m after curing, followed by drying in an oven (PR-4J, ESPEC) at 90°C for 10 minutes to form a first optical functional layer.

An optical functional layer was formed in the same manner as the first optical functional layer except that a functional conductive layer forming composition was coated on one surface or both surfaces of the substrate to a thickness of 1.0 $\mu$m or 3.0 $\mu$m each after curing the functional conductive layer forming composition at 90°C for 10 minutes, and dried in an oven (PR-4J, ESPEC) at 90°C for 10 minutes to form an optical functional layer. Liquid crystals and polymer-dispersed liquid crystals were injected between the optical functional layers coated on the substrate to manufacture optical laminates of Examples 4 to 6, respectively.

A more specific description of the method for forming a functional conductive layer on a polarizing plate is given below. A functional conductive layer composition according to Preparation Example 1 was coated on one surface or both surfaces of a protective film 320 attached to protect the polarizer of the polarizing plate so that the thickness after curing becomes 1.0 $\mu$m or 3.0 $\mu$m, and then the polarizer was bonded to the protective film 320 using an adhesive or pressure sensitive adhesive to manufacture a polarizing plate, thereby manufacturing a polarizing plate substrate layer.

In the respective Examples, the configuration of the substrate layer, the thickness of the second optical functional layer, and whether the functional conductive layer composition was coated on one surface or both surfaces of the substrate layer are each indicated in Table 2 below.

[Table 1]

| | Example 1 | Example 2 | Example 3 |
|---|---|---|---|
| Functional conductive layer material | PEDOT | PEDOT | PEDOT |

(continued)

| | | Example 1 | | | | Example 2 | | | | Example 3 | | | |
|---|---|---|---|---|---|---|---|---|---|---|---|---|---|
| Substrate layer material | | PET | | | | PET | | | | PET | | | |
| Coating of one surface/both surfaces | | One surface | | | | Both surfaces | | | | Both surfaces | | | |
| Thickness of coating layer ($\mu$m) | | 3 | | | | 1/1 | | | | 3/3 | | | |
| Visible light reflectance (%) | | 10 | | | | 10 | | | | 5 | | | |
| Solar energy transmittance (%) | | 40 | | | | 40 | | | | 30 | | | |
| Solar energy blocking rate (%) | | 60 | | | | 60 | | | | 70 | | | |
| Tensile strain (%) | | 0 | 1 | 2 | 10 | 0 | 1 | 2 | 10 | 0 | 1 | 2 | 10 |
| Crack density | | 30 | 30 | 30 | 35 | 40 | 40 | 40 | 45 | 40 | 40 | 40 | 45 |
| Surface resistance ($\Omega/\square$) | | 30 | 30 | 30 | 35 | 40 | 40 | 40 | 45 | 30 | 30 | 30 | 35 |
| Increase rate of surface resistance (%) | | - | 0 | 0 | 16 | - | 0 | 0 | 12 | - | 0 | 0 | 16 |

[Table 2]

| | Example 4 | | | | Example 5 | | | | Example 6 | | | |
|---|---|---|---|---|---|---|---|---|---|---|---|---|
| Functional conductive layer material | PEDOT | | | | PEDOT | | | | PEDOT | | | |
| Substrate layer material | Polarizing plate | | | | Polarizing plate | | | | Polarizing plate | | | |
| Coating of one surface/both surfaces | One surface | | | | Both surfaces | | | | Both surfaces | | | |
| Thickness of coating layer ($\mu$m) | 3 | | | | 1/1 | | | | 3/3 | | | |
| Visible light reflectance (%) | 10 | | | | 10 | | | | 5 | | | |
| Solar energy transmittance (%) | 40 | | | | 40 | | | | 30 | | | |
| Solar energy blocking rate (%) | 60 | | | | 60 | | | | 70 | | | |
| Tensile strain (%) | 0 | 1 | 2 | 10 | 0 | 1 | 2 | 10 | 0 | 1 | 2 | 10 |
| Crack density | 30 | 30 | 30 | 35 | 40 | 40 | 40 | 45 | 40 | 40 | 40 | 45 |
| Surface resistance ($\Omega/\square$) | 30 | 30 | 30 | 35 | 40 | 40 | 40 | 45 | 30 | 30 | 30 | 35 |
| Increase rate of surface resistance (%) | - | 0 | 0 | 16 | - | 0 | 0 | 12 | - | 0 | 0 | 16 |

**Comparative Examples 1 and 2**

Optical laminates of Comparative Examples 1 and 2 were manufactured in the same manner as in Example 1 except that a heat blocking film including a metal reflective layer indicated in Table 2 below was applied instead of the functional conductive layer composition of Preparation Example 1.

[Table 3]

| | | | | | | | Comparative Example 1 | Comparative Example 2 |
|---|---|---|---|---|---|---|---|---|
| Functional conductive layer material | Ag film | | | | Metal thin film | | | |
| Substrate layer material | PET | | | | PET | | | |
| Coating of one surface/both surfaces | One surface | | | | One surface | | | |
| Thickness of coating layer ($\mu$m) | 3 | | | | 3 | | | |
| Visible light reflectance (%) | 40 | | | | 40 | | | |
| Solar energy transmittance (%) | 40 | | | | 50 | | | |
| Solar energy blocking rate (%) | 60 | | | | 50 | | | |
| Tensile strain (%) | 0 | 1 | 2 | 10 | 0 | 1 | 2 | 10 |
| Crack density | 0 | 0 | 0.2 | 1.2 | 0 | 0 | 0.1 | 0.7 |
| Surface resistance ($\Omega/\square$) | 30 | 50 | $3.2*10^3$ | $8.7*10^6$ | - | - | - | - |
| Increase rate of surface resistance (%) | - | 66 | 10666 | 29000000 | - | - | - | - |
| -Ag Film: Silver AG LOW-E Film, Solar Gard<br>-Metal Thin Film: ZV90-35 Heat Blocking Film, Zivent | | | | | | | | |

**<Experimental Example>**

**(1) Visible light reflectance evaluation**

For the optical laminates of Examples and Comparative Examples above, visible light reflectance evaluation can be performed using one or more selected from the group consisting of KS L 2016:2014, FT-IR, Spectrophotometer, Nicolet, 6700, USA and UV-VIS-NIR, Spectrophotometer, Perkin-Elmer, Lambda 950 and 1050, USA equipment, and in the Experimental Example of the present disclosure, the visible light reflectance values were measured and evaluated according to the optical performance test method KS L 2016:2014, 6.3 optical performance test, JIS A 5759: 2016,6 test method, KS L 2514:2011,4 measurement of spectral transmittance and spectral reflectance, and the evaluation results were shown in Tables 1 to 3 above.

**(2) Evaluation of solar energy transmittance and blocking rate**

For the optical laminates of Examples and Comparative Examples above, solar energy transmittance and infrared blocking rate of solar energy can use one or more selected from the group consisting of KS L 2016:2014, FT-IR, Spectrophotometer, Nicolet, 6700, USA and UV-VIS-NIR, Spectrophotometer, Perkin-Elmer, Lambda 950 and 1050, USA equipment can be used, and in the Experimental Example of the present disclosure, the solar energy transmittances and the infrared blocking rates of solar energy were measured and evaluated according to the optical performance test method KS L 2016:2014, 6.3 optical performance test, JIS A 5759: 2016,6 test method, KS L 2514:2011,4 measurement of spectral transmittance and spectral reflectance, and the evaluation results are shown in Tables 1 to 3 above.

**(3) Evaluation of crack density and surface resistance**

In the functional conductive layers included in Examples and Comparative Examples above, the crack densities and surface resistance increase rates were calculated according to Equations 1 and 2 for each of 0%, 1%, 2%, and 10% of tensile strain in the transverse direction (TD), and the calculation results are shown in Tables 1 to 3 above.

Meanwhile, the crack densities and surface resistance increase rates described in Tables 1 to 3 above are the larger values among the measured values of the first functional conductive layer and the second functional conductive layer.

According to the experimental data in Tables 1 to 3 above, it can be conformed that Examples 1 to 6 including a conductive polymer in the optical functional layer have solar energy blocking rates of 60% or more and visible light reflectance values of 10% or less, and thus have a higher heat blocking performance and low reflection function than the Comparative Examples. In addition, the configuration in which the optical functional layer is formed on both surfaces of the substrate layer (see Example 3) seems to be the most excellent configuration since it has a high heat blocking rate and also has a low visible light reflectance compared to the configuration in which the optical functional layer is formed on one surface of the substrate layer (see Example 1), and has low crack density and surface resistance increase rate due to cracks even when the total thickness is the same.

Therefore, in the case of the optical laminates according to Examples of the present disclosure, it could be confirmed that they can have high performance in the conductive polymer material and also have excellent crack density for tensile strain compared to the configurations of Comparative Examples 1 and 2 including the metal materials in the functional conductive layer.

[Industrial Applicability]

According to the optical laminate according to the present disclosure, the economic feasibility of energy can be improved by lowering the transmittance of sunlight and increasing the infrared blocking rate.

**Claims**

1. An optical laminate comprising:

   a liquid crystal layer;
   a first optical functional layer formed on one surface of the liquid crystal layer; and
   a second optical functional layer formed on the other surface of the liquid crystal layer and facing the first optical functional layer,
   wherein the first optical functional layer and the second optical functional layer each independently include a substrate layer and a functional conductive layer, and
   at least one of the first optical functional layer and the second optical functional layer includes two or more layers of the functional conductive layer.

2. The optical laminate of claim 1, wherein the functional conductive layer includes a conductive polymer.

3. The optical laminate of claim 2, wherein the conductive polymer includes one or more selected from the group consisting of polythiophene, poly(3,4-ethylenedioxythiophene), polyaniline, polyacetylene, polydiacetylene, polyphenylene, polyphenylenevinylene, polyphenylene sulfide, poly(thienylene vinylene), poly(thiophene vinylene), polyfluorene, polypyrrole, poly(3,4-ethylenedioxythiophene), poly(3,4-ethylenedioxythiophene):polystyrene sulfonate, poly(3,4-ethylenedioxythiophene):camphorsulfonic acid, poly(3,4-ethylenedioxythiophene):toluenesulfonic acid, poly(3,4-ethylenedioxythiophene):dodecylbenzenesulfonic acid, polyaniline:polystyrenesulfonate, polyaniline:camphorsulfonic acid, polypyrrole:polystyrenesulfonate, polypyrrole:camphorsulfonic acid, polypyrrole:toluenesulfonic acid, polypyrrole:dodecylbenzenesulfonic acid, polythiophene:polystyrene sulfonate, polythiophene: camphorsulfonic acid, polythiophene: toluenesulfonic acid, and polythiophene:dodecylbenzenesulfonic acid.

4. The optical laminate of claim 2, wherein the functional conductive layer has a thickness of 1.0 to 3.0 $\mu$m.

5. The optical laminate of claim 1, wherein the substrate layer includes one or more selected from the group consisting of a cycloolefin resin, a cellulose resin, an acrylate-based resin, a polyester resin, and a polycarbonate resin.

6. The optical laminate of claim 1, wherein the substrate layer includes a polarizer.

7. The optical laminate of claim 1, wherein the liquid crystal layer is polarizing film-liquid crystals (POL-LC) or polymer dispersed liquid crystals (PDLC).

8. The optical laminate of claim 1, wherein the optical laminate has a solar energy blocking rate measured according to the optical performance test method KS L 2016:2014, 6.3 of 60% or more.

9. The optical laminate of claim 1, wherein the functional conductive layer has at least one of the crack density values calculated according to the following Equation 1 of 0 to 0.05 at a tensile strain of more than 1% to 10% or less:

[Equation 1]

$$\rho(\varepsilon) = \ell(\varepsilon)/A$$

(In Equation 1 above, $\varepsilon$ is a tensile strain (%), A is an area (mm$^2$) of an observation region, $\rho(\varepsilon)$ is a crack density value of a functional conductive layer calculated at a tensile strain $\varepsilon$, and $\ell(\varepsilon)$ means a crack area (mm$^2$) of a functional conductive layer in an observation region A measured at a tensile strain $\varepsilon$.)

10. The optical laminate of claim 9, wherein when $\varepsilon$ of Equation 1 above is 2%, the functional conductive layer has a crack density value calculated according to Equation 1 above of 0.

11. The optical laminate of claim 1, wherein the functional conductive layer has at least one of the surface resistance increase rates calculated according to following Equation 2 of 15% or less at a tensile strain of 1% to 10%.

[Equation 2]

$$\delta(\varepsilon) = [\{R.S(\varepsilon)/R.S(0)\}-1] * 100$$

(In Equation 2 above, $\delta(\varepsilon)$ is a surface resistance increase rate (%) of the functional conductive layer calculated at the tensile strain $\varepsilon$, R.S($\varepsilon$) is a surface resistance value ($\Omega/\square$) of the functional conductive layer measured at the tensile strain $\varepsilon$, R.S(0) is a surface resistance value ($\Omega/\square$) of the functional conductive layer measured at the initial state where the tensile strain is 0%, and $\varepsilon$ represents the same meaning as in Equation 1.)

12. The optical laminate of claim 11, wherein the functional conductive layer has at least one of the surface resistance increase rates calculated according to Equation 2 above of 14% or less at a tensile strain of 1% to 10%.

13. The optical laminate of claim 1, wherein the functional conductive layer is formed in direct contact with the substrate layer without a separate substrate being included therebetween.

14. The optical laminate of claim 1, wherein the functional conductive layer is formed in direct contact with the substrate layer with a highly adhesive layer being included therebetween.

15. The optical laminate of claim 1, wherein the liquid crystal layer includes one or more selected from the group consisting of a ball spacer and a column spacer.

16. The optical laminate of claim 1, wherein the optical laminate further includes one or more selected from the group consisting of a protective film, a pressure sensitive adhesive/adhesive layer, an ultraviolet ray absorption layer, and a hard coating layer.

17. A method for manufacturing the optical laminate of any one of claims 1 to 16.

18. A smart window comprising the optical laminate of any one of claims 1 to 16.

19. An automobile in which the smart window of claim 18 is applied to at least one of a front window, a rear window, a side window, a sunroof window, and an internal partition.

20. A building window comprising the smart window of claim 18.

[FIG. 1]

100

| | 140 |
| | 130 |
| | 110-1 |
| | 120 |
| | 110-2 |
| | 130 |
| | 140 |

[FIG. 2]

| | 210 | |
| | 220 | 110 |
| | 210 | |

[FIG. 3]

| | 210 | | |
| | 320 | | |
| | 310 | 300 | 110 |
| | 320 | | |
| | 210 | | |

[FIG. 4]

[FIG. 5]

[FIG. 6]

## INTERNATIONAL SEARCH REPORT

| International application No. |
|---|
| **PCT/KR2023/016721** |

| A. | CLASSIFICATION OF SUBJECT MATTER |
|---|---|

**G02F 1/1335**(2006.01)i; **G02F 1/1343**(2006.01)i; **G02F 1/1337**(2006.01)i; **G02F 1/137**(2006.01)i; **G02F 1/1339**(2006.01)i; **B60J 3/04**(2006.01)i; **E06B 9/24**(2006.01)i; **B32B 17/10**(2006.01)i; **B32B 7/023**(2019.01)i; **B32B 37/12**(2006.01)i

According to International Patent Classification (IPC) or to both national classification and IPC

| B. | FIELDS SEARCHED |
|---|---|

Minimum documentation searched (classification system followed by classification symbols)

G02F 1/1335(2006.01); A42B 3/04(2006.01); B32B 7/02(2006.01); E06B 9/24(2006.01); G02B 5/30(2006.01); G02F 1/01(2006.01); G02F 1/139(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도전층(conductive layer), 투과율(transmittance), 가변(variable), 액정층(liquid crystal layer), 편광필름-액정(polaroid film-liquid crystal), 고분자 분산형 액정(polymer dispersed liquid crystal), 두께(thickness), 크랙(crack), 밀도(density), 인장변형률(tensile strain)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2022-270944 A1 (DONGWOO FINE-CHEM CO., LTD.) 29 December 2022 (2022-12-29) See paragraphs [0052], [0055], [0063], [0066], [0079], [0104]-[0106], [0110] and [0121]-[0122]; claims 6-7; and figures 1 and 4. | 1-3,5-6,13-20 |
| Y | | 4,7-8 |
| A | | 9-12 |
| Y | KR 10-2015-0105266 A (LG CHEM, LTD.) 16 September 2015 (2015-09-16) See claim 12. | 4 |
| Y | KR 10-2019-0105580 A (NITTO DENKO CORPORATION) 17 September 2019 (2019-09-17) See paragraphs [0019] and [0041]. | 7-8 |
| A | KR 10-2022-0041679 A (SAMSUNG SDI CO., LTD.) 01 April 2022 (2022-04-01) See paragraphs [0046]-[0191]; and figures 1-2. | 1-20 |

| ☑ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 February 2024** | **05 February 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/016721** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-1920854 B1 (NDIS CORPORATION) 21 November 2018 (2018-11-21) See paragraphs [0029]-[0030]; and figure 1. | 1-20 |

Form PCT/ISA/210 (second sheet) (July 2022)

**INTERNATIONAL SEARCH REPORT**
Information on patent family members

International application No.

**PCT/KR2023/016721**

| Patent document cited in search report | | | Publication date (day/month/year) | Patent family member(s) | | | Publication date (day/month/year) |
|---|---|---|---|---|---|---|---|
| WO | 2022-270944 | A1 | 29 December 2022 | KR | 10-2023-0000225 | A | 02 January 2023 |
| | | | | KR | 10-2533622 | B1 | 17 May 2023 |
| KR | 10-2015-0105266 | A | 16 September 2015 | CN | 105723275 | A | 29 June 2016 |
| | | | | CN | 105723275 | B | 11 June 2019 |
| | | | | CN | 105874379 | A | 17 August 2016 |
| | | | | CN | 105874379 | B | 01 October 2019 |
| | | | | EP | 3115832 | A1 | 11 January 2017 |
| | | | | EP | 3115832 | A4 | 09 August 2017 |
| | | | | EP | 3115832 | B1 | 20 February 2019 |
| | | | | EP | 3115834 | A1 | 11 January 2017 |
| | | | | EP | 3115834 | A4 | 06 September 2017 |
| | | | | EP | 3115834 | B1 | 30 January 2019 |
| | | | | JP | 2017-508169 | A | 23 March 2017 |
| | | | | JP | 2017-508997 | A | 30 March 2017 |
| | | | | JP | 6326693 | B2 | 23 May 2018 |
| | | | | JP | 6450998 | B2 | 16 January 2019 |
| | | | | KR | 10-1630118 | B1 | 13 June 2016 |
| | | | | KR | 10-1630119 | B1 | 13 June 2016 |
| | | | | KR | 10-2015-0105249 | A | 16 September 2015 |
| | | | | US | 2016-0291357 | A1 | 06 October 2016 |
| | | | | US | 2016-0377902 | A1 | 29 December 2016 |
| | | | | US | 9904129 | B2 | 27 February 2018 |
| | | | | US | 9958742 | B2 | 01 May 2018 |
| KR | 10-2019-0105580 | A | 17 September 2019 | CN | 110178074 | A | 27 August 2019 |
| | | | | EP | 3570094 | A1 | 20 November 2019 |
| | | | | EP | 3570094 | B1 | 22 June 2022 |
| | | | | JP | 2018-116273 | A | 26 July 2018 |
| KR | 10-2022-0041679 | A | 01 April 2022 | CN | 114252949 | A | 29 March 2022 |
| | | | | US | 2022-0099876 | A1 | 31 March 2022 |
| KR | 10-1920854 | B1 | 21 November 2018 | US | 11236544 | B2 | 01 February 2022 |
| | | | | US | 2021-0071473 | A1 | 11 March 2021 |
| | | | | WO | 2019-135653 | A1 | 11 July 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018010035 A

- KR 102265762